# EUROPÄISCHE PATENTSCHRIFT

(11) **EP 3 732 975 B1**
(45) Veröffentlichungstag und Bekanntmachung des Hinweises auf die Patenterteilung: **03.07.2024**
(21) Anmeldenummer: 19172533.2
(22) Anmeldetag: 03.05.2019
(51) Int. Cl.: A22C 7/00, A21C 1/14, A21C 5/00, A21C 11/16

(54) **FÜLLSTROMTEILER**
FILLING FLOW DISTRIBUTOR
SÉPARATEUR DU FLUX DE REMPLISSAGE

(43) Veröffentlichungstag der Anmeldung: 04.11.2020
(73) Patentinhaber: Albert Handtmann Maschinenfabrik GmbH & Co. KG, 88400 Biberach (DE)
(72) Erfinder: Teufel, Daniel, 88433 Schemmerhofen (DE); Liermann, Torsten, 88471 Laupheim (DE)
(74) Vertreter: Grünecker Patent- und Rechtsanwälte PartG mbB

(56) Entgegenhaltungen:
- EP-A1- 0 683 981
- WO-A1-2012/094240
- WO-A1-2014/106627
- DE-A1- 2 033 537
- US-A- 3 945 785

## Beschreibung

Die Erfindung betrifft ein Verfahren zum Portionieren pastöser Massen zur Nahrungsmittelherstellung sowie eine Füllmaschine, insbesondere zum Durchführen des Verfahrens. Verfahren zum Portionieren pastöser Massen zur Nahrungsmittelherstellung und entsprechende Füllmaschinen mit Füllstromteilern sind bereits aus dem Stand der Technik bekannt, wie zum Beispiel aus dem Dokument WO2012094240 A1.

Dabei werden Produkte beispielsweise auf ein Transportband oder in Behältnisse portioniert, d.h. portionsweise abgegeben. Dabei wird pastöse Masse mit einer Füllmaschine zu einem Füllstromteiler gefördert und dort in mehrere Massenströme aufgetrennt und portionsweise ausgestoßen. Der Luftanteil von beispielsweise bis zu 10% in der pastösen Masse bewirkt beim Stopp des Füllstromteilers (und/oder des Förderwerks der Füllmaschine) zwischen den Portionen, dass durch die Expansion des unter Druck stehenden Füllguts in einem Bereich vor dem Füllrohrende das Füllgut nachläuft. Dies führt zu einer schlechten Gewichtsgenauigkeit oder zu einer schlechten Abtrennung von aufeinanderfolgenden Portionen, d.h. die Portionen sind nicht ausreichend voneinander getrennt, sondern gehen ineinander über.

Die Verwendung von Ausstoß- oder Verschlussventilen, zum Verhindern des zuvor beschriebenen Nachlaufens der pastösen Masse bringt jedoch ebenfalls wesentliche Nachteile mit sich. Der Einbau von beispielsweise Kolben- oder Drehkolbenventilen ist aufwändig und bringt einen erhöhten Platzbedarf mit sich. Außerdem hängt die Ausstoßgeschwindigkeit von der Kolbengeschwindigkeit ab, was sich nachteilig auf die Produktionsgeschwindigkeit auswirkt. Ferner ist eine Sicherheitseinhausung um das Ventil notwendig. Auch bei kleinen Portionen gibt es aufgrund eines großen Totvolumens Schwierigkeiten. Darüber hinaus muss sich die Masse vom Kolben ablösen, was abhängig ist von der Konsistenz der Masse und auch problematisch bei kleinen Portionen ist. Schließlich ergibt sich auch ein großer Demontage-und Montageaufwand, insbesondere bei der Reinigung.

Hiervon ausgehend liegt der vorliegenden Erfindung die Aufgabe zugrunde, ein Verfahren zum Portionieren pastöser Masse sowie eine Füllmaschine zum Durchführen des Verfahrens bereitzustellen, mit denen auf einfache Art und Weise pastöse Masse portioniert werden kann, ohne dass es zu einem Nachlaufen des Produkts kommt und die einzelnen Portionen sicher voneinander getrennt sind.

Erfindungsgemäß wird diese Aufgabe durch die Merkmale der Ansprüche 1 und 8 gelöst.

Gemäß der vorliegenden Erfindung wird jeweils am Ende einer Portion der Massestrom entgegen der Ausstoßrichtung zurückgesaugt. Dadurch, dass der Massestrom zurückgesaugt wird, kann ein Nachlaufen der pastösen Masse durch Expansion wirksam verhindert werden. Entsprechendes kann auf kostengünstige und einfache Weise realisiert werden, ohne dass zusätzliche Ausstoß- oder Verschlussventile notwendig sind.

Dadurch, dass das Nachlaufen verhindert werden kann, kommt es zu einer exakten Portionstrennung und somit kann eine höhere Portionierleistung und verbesserte Gewichtsgenauigkeit bei gleichzeitig erheblicher Kosteneinsparung realisiert werden. Im Vergleich zu der bekannten Ventiltechnik ist hier eine höhere Taktleistung möglich. Darüber hinaus ermöglicht der einfache Aufbau auch eine einfache und schnelle Reinigung. Ferner ergibt sich eine hohe Ablegegenauigkeit aufgrund geringerer Haftflächen Bei der Verwendung von Rohren oder Schläuchen kann nur die Kreisringfläche eine haftende Wirkung erzielen. Diese ist im Vergleich zu einem Kolben wesentlich kleiner. Es muss hier dann lediglich die Kohäsionskraft der Masse innerhalb des Massestroms überwunden werden, um die einzelnen Portionen voneinander zu trennen.

Darüber hinaus sind im Vergleich zur bekannten Ventiltechnik auch keine gesonderten Sicherheitsvorkehrungen notwendig. Da es gemäß der vorliegenden Erfindung im Vergleich zur Ventiltechnik keine großen Totvolumen gibt, ist das erfindungsgemäße Verfahren insbesondere bei geringen Produktgewichten überlegen, vor allem im Hinblick auf die Gewichtsgenauigkeit. Somit können gemäß der Erfindung sowohl Kleinstmengen, als auch größere Portionsgewichte abgedeckt werden.

"Am Ende einer Portion" bedeutet, an der Abrissstelle zur nachfolgenden Portion, d. h., dass ein vorbestimmtes Volumen V1 in Ausstoßrichtung z.B. durch ein jeweiliges Dosierelement des Füllstromteilers gefördert worden ist, derart, dass ein Portionsvolumen Vp, das einer Portion entspricht, am Ausstoßende des Füllstromteilers ausgestoßen werden kann und somit von der nachfolgenden Portion getrennt ist. Das heißt, dass am Ende der Portion der Massestrom entgegen der Ausstoßrichtung A kurz zurückgesaugt wird, und dann wieder das vorbestimmte Volumen V1, das dem Volumen einer Portion plus dem zurückgesaugten Volumen Vr entspricht, in Ausstoßrichtung A gefördert wird. Bei dünnflüssigen Massen, wie z.B. Marmelade kann es erforderlich sein, dass aufgrund von Leckage mehr als 100 % des Innenvolumens der jeweiligen Leitung nach den Dosierelement zurückgesaugt werden muss.

Gemäß der Erfindung passieren im Füllstromteiler die aufgetrennten Masseströme jeweilige Dosierelemente zur Einstellung des Volumenstroms, wobei am Ende der Portion, d.h. wenn ein bestimmtes Volumen durch das Dosierelement hindurch gefördert wurde, das jeweilige Dosierelement rückwärtsläuft. Das bedeutet, dass das Zurücksaugen über ein Rückwärtslaufen der Dosierelemente erfolgt. Die Dosierelemente können dabei zum Beispiel über einen Motor angetrieben werden. Zum Beispiel können die Dosierelemente als servoangetriebene Pumpen ausgebildet sein. Vorzugsweise werden die Dosierelemente über einen gemeinsamen Antrieb angetrieben. Ein gemeinsamer Antrieb ist kostengünstig und dient dazu, dass der Volumenstrom durch die unterschiedlichen Auslaufleitungen konstant gehalten werden kann.

Es ist aber auch möglich, Dosierelemente zu verwenden, die vom Produkt selbst angetrieben werden. Solche Dosierelemente sind beispielsweise als frei um eine Achse umlaufende Schaufelräder ausgebildet. Wenn die Dosierelemente dann miteinander gekoppelt sind, beispielsweise um eine gemeinsame Achse umlaufen, kann sichergestellt werden, dass der Volumenstrom durch die unterschiedlichen Ablaufleitungen konstant ist.

Zum Rücksaugen können die Dosierelemente dann vorzugsweise über eine Einrichtung entgegen der Ausstoßrichtung A bewegt werden, beispielsweise durch eine Einrichtung zum Erzeugen eines Unterdrucks in der gemeinsamen Leitung vor den Dosierelementen oder über einen entsprechenden Antrieb oder Bewegungsmechanismus, der auf die einzelnen Achsen oder auf die gemeinsame Achse der Schaufelräder wirkt. Wenn eine Einrichtung zum Erzeugen eines Unterdrucks vorgesehen ist, kann diese zum Rücksaugen die Funktion des Förderwerks übernehmen und beim Ausstoßen der nächsten Portion das abgesaugte Volumen wieder der nächsten Portion zuführen.

Alternativ kann das Rücksaugen durch jeweils eine Einrichtung zum Erzeugen eines Unterdrucks in der jeweiligen Leitung nach dem jeweiligen Dosierelement bewirkt werden, beispielsweise durch jeweils einen Zylinder mit veränderbarem Volumen, wobei diese Zylinder einzeln oder gemeinsam von einem Aktor angetrieben werden. Bei der jeweiligen Nächsten Portion wird dann die jeweils zurückgesaugte Menge wieder ausgestoßen.

Gemäß einer bevorzugten Ausführungsform fördert das Förderwerk der Füllmaschine die pastöse Masse portionsweise zum Füllstromteiler, d.h. läuft nicht kontinuierlich.

Es ist besonders vorteilhaft, wenn auch das Förderwerk am Ende einer Portion V ₚ entsprechend rückwärtsläuft. So kann das Förderwerk der Füllmaschine, wenn dies ein bestimmtes Volumen V_{f} in Ausstoßrichtung transportiert hat, ebenfalls rückwärtslaufen. Das von dem Förderwerk der Füllmaschine in Ausstoßrichtung A geförderte Volumen V _{f} entspricht dann dem Volumen von n ausgestoßenen Portionen (wenn der Strom in n Teilströme durch den Füllstromteiler aufgetrennt wird) plus dem vom Förderwerk zurückgesaugten Volumen V_{R}. So kann das von dem Förderwerk zurückgesaugte Volumen V_{R} im Wesentlichen der Summe der Volumina Vᵣ, die von den Dosierelementen zurückgesaugt werden, also n Vᵣ, entsprechen. Wenn beispielsweise Dosierelemente verwendet werden, die über das Produkt angetrieben werden, so kann bewerkstelligt werden, dass sich diese Dosierelemente dann, bedingt durch den über das rückwärtslaufende Förderwerk erzeugten Unterdruck, ebenfalls rückwärts bewegen, zum Beispiel die Schaufelräder sich in Rückwärtsrichtung um die Achse drehen. Ist die Reibung zu groß, können wie zuvor erläutert die Dosierelemente über eine entsprechende Einrichtung rückwärts bewegt werden, indem z.B. die jeweilige oder gemeinsame Drehachse rückwärts gedreht wird.

Um eine Portionen von der nachfolgenden Portion zu trennen, wird keine separate Trenneinrichtung benötigt. Ein Abtrennen kann beispielsweise über einen Abriss durch eine Relativbewegung der ausgestoßenen Portion relativ zur nachfolgenden Portion erfolgen. Dies kann beispielsweise geschehen durch - Rücksaugen und Mitnahme der ausgestoßenen Portion mit einer Transporteinrichtung, insbesondere einem Transportband, - Hubbewegung des Füllstromteilers, - Gewichtskraft der ausgestoßenen Portion. So sind keine zusätzlichen mechanischen Teile notwendig um die Portionen zu trennen und zu vereinzelten, sodass Kosten gespart werden können und darüber hinaus die Produktionsgeschwindigkeit erhöht werden kann.

Vorteilhafterweise ist an den Ausstoßenden des Füllstromteilers, insbesondere am Ende einzelner Leitungen, insbesondere Rohre und/oder Schläuche und/ oder Düsen, durch die die Portionen ausgestoßen werden, jeweils eine selbstschließende Membran, insbesondere eine geschlitzte Membran angeordnet, die sich beim Rücksaugen der pastösen Masse verschließt und bei Bewegung der pastösen Masse in Ausstoßrichtung automatisch öffnet. Eine entsprechende Membran verhindert ebenfalls Nachlaufen des Produkts, insbesondere bei niederviskosen Massen. An der Membran kann dann die Abrissstelle zur nachfolgenden Portion sein.

Die Erfindung betrifft auch eine Füllmaschine, insbesondere zum Durchführen des Verfahrens und umfasst ein Förderwerk zum Fördern von pastöser Masse zu einem Füllstromteiler. Der Füllstromteiler ist derart ausgebildet, dass er die pastöse Masse in mehrere Massenströme aufteilen und portionsweise in Ausstoßrichtung ausstoßen kann. Der Füllstromteiler umfasst auch mehrere Dosiereinrichtungen zum Einstellen des Volumenstroms der Massenströme. Die Füllmaschine umfasst weiter eine Steuereinrichtung, die derart ausgelegt ist und die die Füllmaschine derart ansteuert, dass jeweils am Ende einer Portion der Massenstrom entgegen Ausstoßrichtung A zurückgesaugt wird.

Die Dosierelemente sind über einen Motor angetrieben und insbesondere als servoangetriebene Pumpe ausgebildet, wobei die Dosierelemente vorzugsweise über einen gemeinsamen Antrieb angetrieben werden. Alternativ dazu können die Dosierelemente auch vom Produkt angetrieben werden und sind vorzugsweise als frei um eine Achse laufende Schaufelräder ausgebildet. Gemäß einem bevorzugten Ausführungsbeispiel sind die Dosierelemente miteinander gekoppelt.

Der Füllstromteiler kann vorzugsweise so ausgebildet sein, dass nach den Dosierelementen Leitungen, zum Beispiel Rohre und/oder Schläuche und/oder Düsen angeordnet sind, über die die Massenströme jeweils gefördert und ausgestoßen werden. Gemäß einem bevorzugten Ausführungsbeispiel sind die entsprechenden Leitungen, d.h. zum Beispiel Rohre und/oder Schläuche und/oder Düsen zueinander beweglich angeordnet, derart, dass der Abstand der Ausstoßenden zueinander veränderbar ist. Somit kann der Abstand von den ausgestoßenen Produkten zueinander verändert werden, ohne dass dabei der ganze Füllstromteiler ausgewechselt werden muss. Ein Ändern des Abstands ist beispielsweise vorteilhaft, wenn die Portionen in einen Behälter ausgestoßen werden. Bei Veränderung der Größe des Behälters oder Produktwechsel kann es vorteilhaft sein, auch den Abstand der Portionen zu verändern.

Vorteilhafterweise sind die Leitungen, d.h. insbesondere Rohre und/oder Schläuche und/oder Düsen gebogen, derart, dass das freie Ausstoßende nach unten in Richtung einer Fläche, auf die Portionen ausgestoßen werden, gerichtet ist. Eine entsprechende Ausstoßrichtung hat sich als vorteilhaft erwiesen. Die freie Ausstoßöffnung liegt dabei vorzugsweise in einer Ebene, die 0° bis 60°, vorzugsweise 0° bis 45° zu einer Ebene, in der die Fläche liegt, auf der die Portionen ausgestoßen werden.

Vorteilhafterweise ist zumindest ein Teil der Leitungen verdrehbar. Vorteilhafterweise sind die die Leitungen dabei vorzugsweise um mindestens eine Mittelachse verdrehbar, d.h. bei gebogenen Leitungen um die Mittelachse am Anfang der Leitung, insbesondere des Rohres und/oder Schlauches und/oder Düse.

Vorteilhafterweise sind zwischen den Dosiereinrichtungen und den Ausstoßenden des Füllstromteilers Leitungen ohne ansteuerbare Ausstoß- oder Verschlussventile angeordnet.

Vorteilhafterweise ist am Ausstoßende des Füllstromteilers eine selbstschließende Membran, insbesondere eine geschlitzte Membran angeordnet, die sich beim Rücksaugen der pastösen Masse verschließen kann und bei Bewegung der pastösen Masse in Ausstoßrichtung automatisch öffnen kann.

Bei dem erfindungsgemäßen Verfahren beträgt das zurückgesaugte Volumen Vᵣ 0,5 % bis 1000 % des Innenvolumens der jeweiligen Leitung nach den jeweiligen Dosierelementen. Dieser Bereich hat sich als vorteilhaft herausgestellt, um ein Nachlaufen des Füllguts zu verhindern und dennoch eine ausreichende Produktionsgeschwindigkeit zu gewährleisten. Das Rücksaugvolumen ist unabhängig von der Portionsgröße und ist abhängig vom jeweiligen Produkt, insbesondere dessen Viskosität und dem Innenvolumen der entsprechenden Leitung. Das ideale Rücksaugvolumen und Zeitpunkt kann für das jeweilige Produkt empirisch bestimmt werden. Bei hochviskosen pastösen Massen (bzw. z.B. Massen mit η > 10⁴ mPas bei T= 10°C) und/oder mit Luftgehalt < 20% reicht ein kleines Rücksaugvolumen, zum Beispiel zwischen 0,5 und 100 % des Volumens der Leitung. Bei Massen mit niedriger Viskosität (bzw. z.B. η < 10⁵ mPas bei T= 10°C) und/oder mit Luftgehalt > 15% kann das Rücksaugvolumen größer sein, z.B. größer als 100 % der entsprechenden Leitung sein, um ein Nachlaufen zu verhindern. Die Bereiche sind produktabhängig und können nicht scharf voneinander abgegrenzt werden so dass sich der o.g. überlappende Bereich ergibt. Die ideale Rücksaugmenge wird empirisch bestimmt.

Die Erfindung wird nachfolgend unter Bezugnahme folgender Figuren näher erläutert.
Figur 1 zeigt grobschematisch ein Ausführungsbeispiel gemäß der vorliegenden Erfindung.
Figur 2 zeigt in perspektivischer Darstellung ein bevorzugtes Ausführungsbeispiel gemäß der vorliegenden Erfindung.
Figur 3 zeigt in perspektivischer Darstellung einen Ausschnitt eines Füllstromteilers mit verdrehbar befestigten Rohren.
Figur 4 zeigt schematisch in perspektivischer Darstellung Rohre mit Schlauchverbindung gemäß einem weiteren Ausführungsbeispiel der vorliegenden Erfindung
Figur 5 zeigt ein Diagramm, das das Fördervolumen des Förderwerks der Füllmaschine und das Fördervolumen eines Dosierelements in Abhängigkeit der Zeit zeigt.
Figur 6 zeigt grobschematisch ein Ausführungsbeispiel gemäß der vorliegenden Erfindung mit einem dem Füllstromteiler nachgeschalteten Transportband.
Figuren 7a bis d zeigen schematisch Ausführungsbeispiele mit einer selbstverschließenden Membran.
Figuren 8a bis 8e zeigen die zeitliche Abfolge eines Ausführungsbeispiels eines erfindungsgemäßen Verfahrens.
Figuren 9a bis 9d zeigen die zeitliche Abfolge eines weiteren Ausführungsbeispiels eines erfindungsgemäßen Verfahrens.

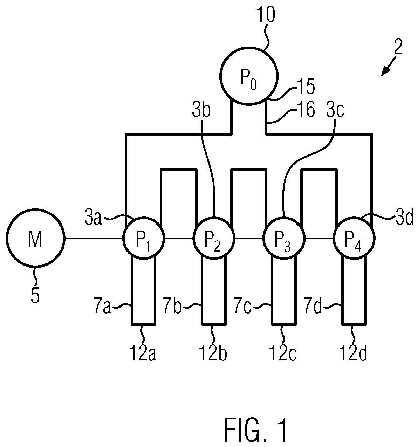

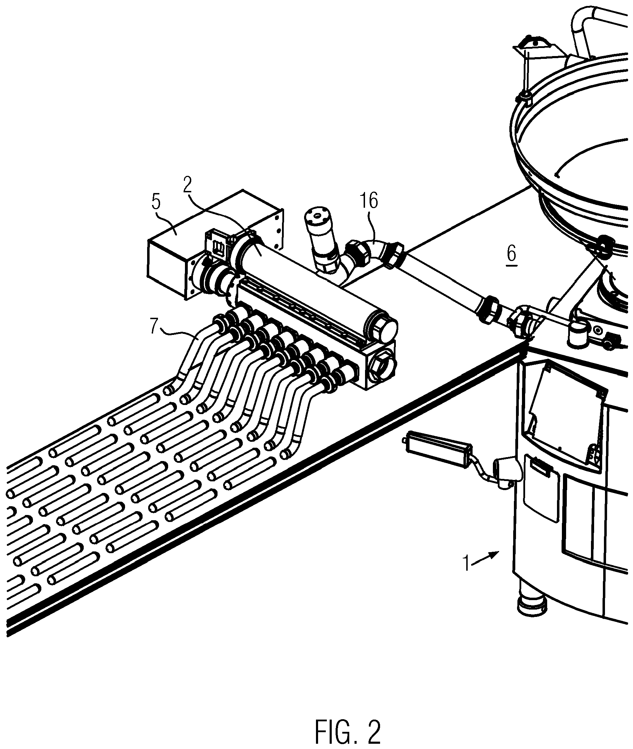

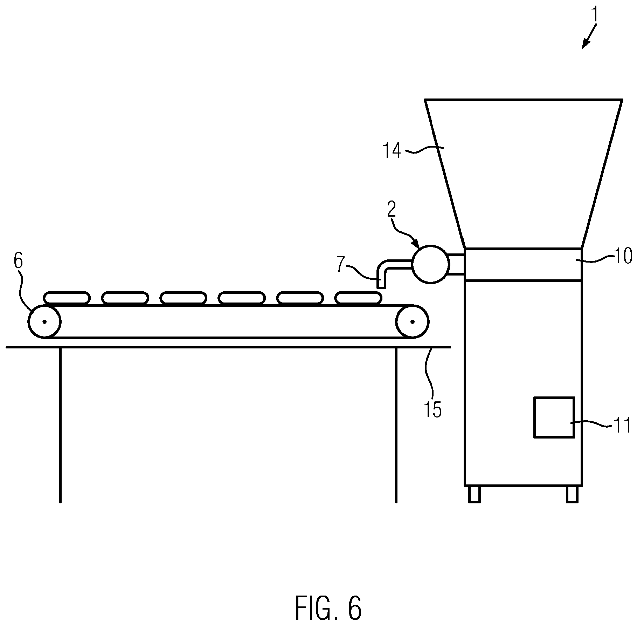

Figur 6 zeigt eine Vorrichtung gemäß der vorliegenden Erfindung. Die Füllmaschine 1 weist einen Trichter 14 auf zur Aufnahme der pastösen Masse. Unter pastöser Masse versteht man hier beispielsweise: Wurstbrät, Teig, Marmelade, Cremes, Nussmasse, etc. Die Füllmaschine 1 ist beispielsweise ein Vakuumfüller. Die Füllmaschine umfasst ein Förderwerk 10, das die pastöse Masse zu einem Auslass 15, zum Beispiel ein Auslassrohr fördert. Das Förderwerk kann beispielsweise eine Flügelzellenpumpe oder eine Schneckenpumpe etc. sein. In Ausstoßrichtung nach dem Auslass 15 ist ein Füllstromteiler 2 angeordnet, wie er beispielsweise auch in Figuren 1 und 2 dargestellt ist. Der Füllstromteiler teilt den von dem Förderwerk 10 geförderten Massestrom in mehrere n Masseströme auf, in Figur 1 beispielsweise vier Ströme, in Figur 2 beispielsweise in acht Ströme. Dazu verzweigt sich die gemeinsame Leitung 16 in mehrere Leitungen 7a, 7b, 7c, 7d.

Damit aufgrund des Druckgefälles der Volumenstrom in den einzelnen Leitungen konstant ist sind Dosierelemente 3a, b, c, d in den entsprechenden Leitungen angeordnet. In Figur 1 sind die Dosierelemente schematisch in den abzweigenden Leitungen angeordnet, diese können aber auch am Anfang der Leitungen 7 angeordnet sein. Über die Dosiereinrichtungen kann der Volumenstrom in den entsprechenden Leitungen eingestellt werden. Die Dosierelemente können über einen Motor 5, vorzugsweise über einen gemeinsamen Motor 5 angetrieben sein, und beispielsweise derart gekoppelt sein, dass in jeder Leitung nach dem jeweiligen Dosierelement ein gleicher Volumenstrom vorliegt.

Es ist auch möglich, dass die Dosierelemente 3a, b, c, d vom Produkt, d.h. der pastösen Masse angetrieben sind, und zum Beispiel als frei um eine Achse umlaufende Schaufelräder ausgebildet sind, die vorzugsweise miteinander gekoppelt sind, d.h. um eine gemeinsame Achse umlaufen.

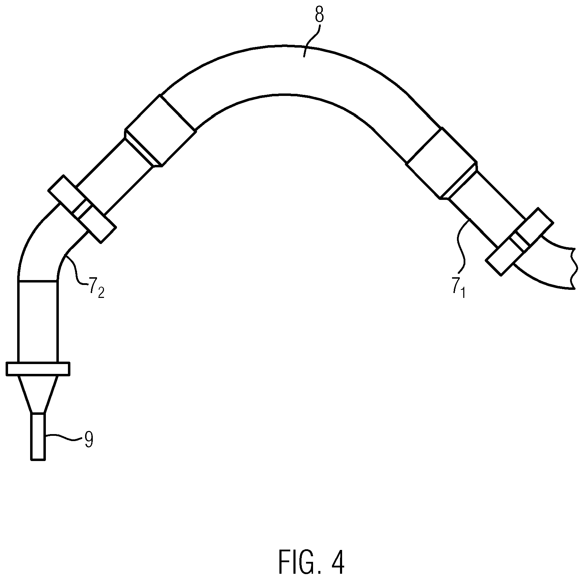

Nach den Dosierelementen 3a, b, c, d schließen sich dann die entsprechenden Leitungen beispielsweise Rohre 7a, b, c, d und/oder Schläuche 8a, b, c, d und/oder Düsen 9a, b, c, d an. Wie beispielsweise in Figur 4 gezeigt ist, kann eine entsprechende Leitung aus einer Kombination eines Rohrs 7₁, Schlauch 8, Rohr 7₂ und Düse 9 gebildet sein. Figur 4 zeigt zum Beispiel zwei Leitungen mit Schläuchen 8, die an einem separaten Holm befestigt werden können. Die Verwendung eines Schlauchs ermöglicht aufgrund der Flexibilität, dass die Leitungen gebogen und entsprechend angepasst werden können. Somit können die Leitungen auf einfache Art und Weise exakt positioniert werden. Darüber hinaus ist der Einsatz von Schläuchen auch kostengünstig. Schläuche sind darüber hinaus auch einfach zu fertigen und bringen Vorteile bezüglich des geringeren Gewichts mit sich.

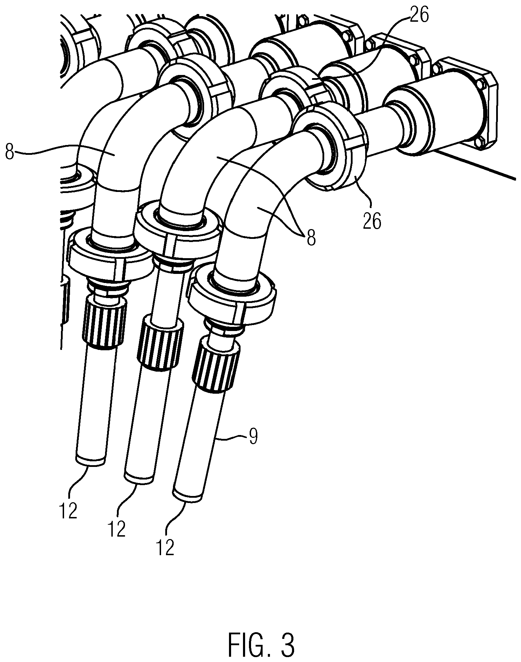

Figur 3 zeigt eine weitere Variante, bei der die Dosierelemente 3 in einem Gehäuse angeordnet sind, wobei Rohrstutzen 26 aus dem Gehäuse ragen, an die gebogene Rohre 8a, 8b, hier in Kombination mit Düsen 9a, 9b, befestigt sind. Die gebogenen Rohre 8a, 8b sind verdrehbar befestigt. Das heißt, dass der Abstand der Ausstoßenden 12 zueinander variiert werden kann. Die drehbar angeordneten Rohrbögen können dann in der gewünschten Position fixiert werden.

Dadurch, dass die Rohre 8a, 8b gebogen sind, ist es möglich, dass das Ausstoßende 12 bzw. die freie Ausstoßfläche nach unten in Richtung einer Fläche, auf der die Portionen ausgestoßen werden, gerichtet ist, wobei die freie Ausstoßöffnung in einer Ebene liegt, die 0° bis 60°, vorzugsweise 0° bis 45° zu einer Ebene, in der die Fläche, auf der die Portionen ausgestoßen werden, liegt, geneigt ist. Eine entsprechende Anordnung hat sich als vorteilhaft erwiesen, da das ausgestoßene Produkt dann bedingt durch die Schwerkraft nach unten fällt. Die erfindungsgemäße Vorrichtung benötigt keine gesonderte Abtrenneinrichtung zum Abtrennen der einzelnen Portionen. Das Abtrennen kann durch einen Abriss durch eine Relativbewegung der ausgestoßenen Portion relativ zur nachfolgenden Portion erfolgen. Insbesondere durch Mitnahme der ausgestoßenen Portion mit einer Transporteinrichtung 6, hier dem Transportband 6. Aber auch zum Beispiel eine Hubbewegung des Füllstromteilers ermöglicht einen Abriss. Dazu ist eine hier nicht dargestellte Hubeinrichtung vorgesehen, über die sich der Füllstromteiler in Vertikalrichtung relativ zu einer Fläche bzw. einer Transporteinrichtung bewegen kann.

Die erfindungsgemäße Füllmaschine umfasst auch eine Steuereinrichtung 11, über die die Füllmaschine 1 und ihr Füllstromteiler 2 ansteuerbar sind. Die Steuereinrichtung 11 kann in der Füllmaschine integriert sein. Die gesamte Steuereinrichtung kann sich jedoch auch aufteilen, sodass ein Teil der Steuereinrichtung am Füllstromteiler angeordnet ist und ein Teil in der Füllmaschine. Auch die Transporteinrichtung 6 kann über die Steuereinrichtung 11 angesteuert werden oder über eine separate Steuerung.

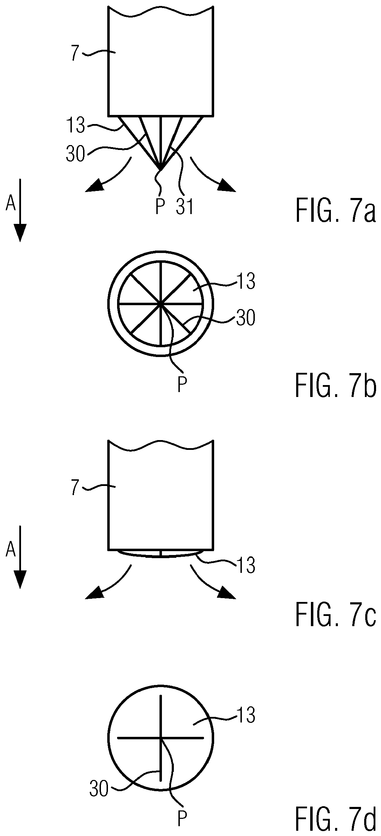

Am Ausstoßende 12 des Füllstromteilers, d.h. vorzugsweise am Ausstoßende der Leitungen 7 kann eine selbstschließende Membran 13 angeordnet sein, die in Figur 7a, b, c, d dargestellt ist. Eine entsprechende Membran 13, hier insbesondere geschlitzte Membran öffnet sich bei Bewegung der pastösen Masse in Ausstoßrichtung A. Dabei bewegen sich die durch Schlitze getrennten Membranteile, wie durch die Pfeile dargestellt ist, nach außen. Eine solche Squeezemembran wird beispielsweise auch bei Kunststofflebensmittelbehältnissen wie beispielsweise Ketchup-Flaschen verwendet.

Bei dem in Figur 7a gezeigten Ausführungsbeispiel umfasst die Membran eine hohlförmige nach außen gerichtete Ausbuchtung 31, wobei sich Schlitze 30 im Bereich der Ausbuchtung befinden und auf einen Punkt P zulaufen. Wird durch den Massestrom ein Druck auf die Membran ausgeübt, öffnen sich der Bereich zwischen den Schlitzen 30, wie durch die Pfeile dargestellt und der Durchgang öffnet sich. Bei nachlassendem Druck sowie bei einem Rücksaugen der pastösen Masse verschließen sich die Membranteile wieder von selbst (Figur 7a, 7b). Figuren 7 c und d zeigen eine weitere Ausführungsform, bei der die Membran 13 beispielsweise im Wesentlichen in einer Ebene liegt und wie zuvor beschrieben mehrere Schlitze 30 aufweist, die auf einem Punkt P zulaufen, wobei sich wie durch die Pfeile dargestellt ist, die Membranteile bei Druck in der Leitung 8 nach außen öffnen und beispielsweise bei nachlassendem Druck bzw. beim Rücksaugen verschließen.

Um gewichtsgenaue Portionen auszustoßen, ohne dass pastöse Masse nachläuft, wird bevorzugt folgendes Verfahren durchgeführt.

Pastöse Masse wird in den Fülltrichter 14 eingefüllt und in bekannter Weise über das Förderwerk 10 in Richtung Füllstromteiler 2 gefördert. Im Füllstromteiler 2 wird, wie im Zusammenhang mit Figur 1 erläutert wird, der Massestrom in mehrere n Masseströme aufgeteilt, wobei der Volumenstrom über Dosierelemente 3a, b, c, d eingestellt wird, vorzugsweise derart, dass der Volumenstrom aller Teilströme gleich ist. Dazu können die Dosierelemente über einen Motor 5 entsprechend angetrieben werden. Dabei entspricht die Summe der Teilvolumenströme dem Volumenstrom, der von dem Förderwerk 10 erzeugt wird.

Die pastöse Masse wird dann aus den Leitungen 7 des Füllstromteilers 2 ausgestoßen. Jeweils am Ende einer Portion wird der Massestrom entgegen der Ausstoßrichtung zurückgesaugt.

"Am Ende einer Portion" bedeutet also an der Abrissstelle des Massestroms, also der Grenze zur nachfolgenden Portion, d.h. dass ein Portionsvolumen Vₚ, das einer Portion entspricht, am Ausstoßende des Füllstromteiler ausgestoßen werden kann- nachdem ein vorbestimmtes Volumen V₁ in Ausstoßrichtung durch die jeweiligen Dosierelemente gefördert worden ist. Das heißt, dass am Ende der Portion Vₚ der Massestrom entgegen Ausstoßrichtung A kurz zurückgesaugt wird, und dann wieder das vorbestimmte Volumen V₁, das dem Volumen einer Portion V ₚ plus dem zurückgesaugten Volumen Vᵣ entspricht, in Ausstoßrichtung A gefördert wird.

Es ist besonders vorteilhaft, wenn auch das Förderwerk 10 am Ende einer ausgestoßenen Portion V ₚ entsprechend rückwärtsläuft. So kann das Förderwerk der Füllmaschine, wenn dies ein bestimmtes Volumen V_{f} in Ausstoßrichtung transportiert hat, ebenfalls rückwärtslaufen. Das von dem Förderwerk der Füllmaschine in Ausstoßrichtung A geförderte Volumen V _{f} entspricht dann dem Volumen von n ausgestoßenen Portionen (wenn der Strom in n Teilströme durch den Füllstromteiler aufgetrennt wird) plus dem vom Fördererwerk 10 zurückgesaugten Volumen V_{R}. So kann das von dem Förderwerk zurückgesaugte Volumen V_{R} im Wesentlichen der Summe der Volumina Vᵣ, die von den Dosierelementen zurückgesaugt werden, also n Vᵣ, entsprechen. Wenn beispielsweise Dosierelemente verwendet werden, die über das Produkt angetrieben werden, so kann bewerkstelligt werden, dass sich diese Dosierelemente dann, bedingt durch den über das rückwärtslaufende Förderwerk erzeugten Unterdruck, ebenfalls rückwärts bewegen, zum Beispiel die Schaufelräder sich in Rückwärtsrichtung um die Achse drehen oder die Schaufelräder werden durch eine gesonderte Einrichtung rückwärts bewegt.

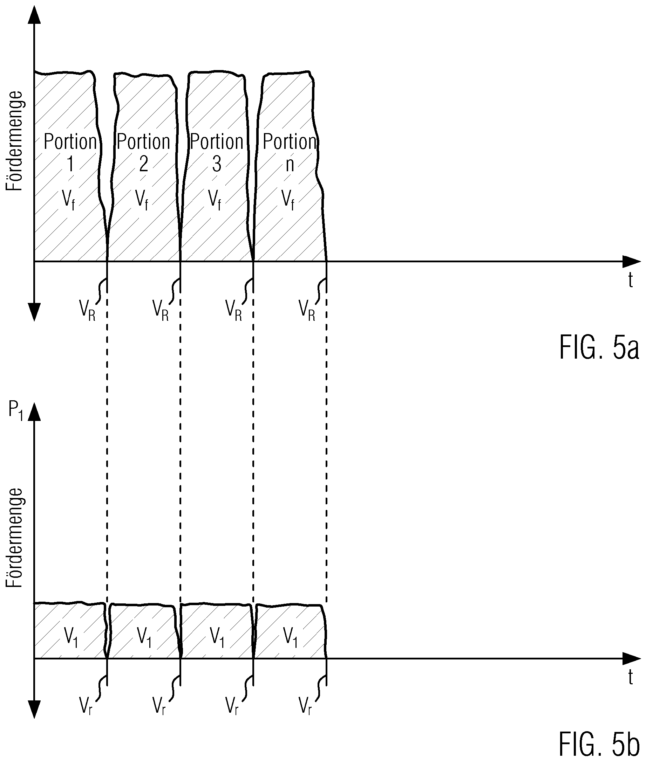

Das Förderwerk 10 und die Dosiereinrichtungen 3a, b, c, d fördern also, wie insbesondere auch aus Figur 5 hervorgeht, ein Fördervolumen V _{f}, das heißt, in Figur 5 die Fläche unterhalb der einzelnen Graphen. Ist ein vorbestimmtes Volumen durch die Pumpe 10 gefördert worden fängt die Pumpe 10 an rückwärts zu laufen, wie in Figur 5a dargestellt ist und saugt somit die pastöse Masse entgegen der Ausstoßrichtung A. Dabei entspricht das durch die Pumpe 10 zurückgesaugte Volumen V_{R} etwa n * V ᵣ, das heißt, das von den Dosierelementen 3ₙ zurückgesaugte Volumen mal der Anzahl n der Dosierelemente. Die Dauer der Rückwärtsbewegung des Förderwerks 10 liegt in einem Bereich bis zu 1 Sekunde. Die Figur 5b zeigt das Fördervolumen in Abhängigkeit der Zeit eines einzelnen Dosierelements 3a, b, c, d. Wie aus Figur 5 hervorgeht, beträgt beispielsweise das Fördervolumen V₁, das der schraffierten Fläche unterhalb der Graphen entspricht, z.B. 1/n, hier einem Viertel der Gesamtfördermenge, wobei n die Anzahl der aufgeteilten Volumenströme entspricht. Ist von dem Dosierelement 3a ein entsprechendes Volumen V ₁ transportiert worden, so läuft auch hier das Dosierelement, wie in Figur 5b dargestellt ist, rückwärts. Hier entspricht das zurückgesaugte Volumen Vᵣ 0,5 % bis 1000 % des in der Leitung befindlichen Volumens. Das bedeutet, dass bei diesem Ausführungsbeispiel z.B. das von dem Förderwerk zurückgesaugte Volumen im Wesentlichen der Summe der Volumina Vᵣ, die von den Dosierelementen zurückgesaugt werden, entspricht.

Das in Figur 5a und 5b gezeigte Ausführungsbeispiel ist nur ein Beispiel. Wesentlich ist, dass das Fördervolumen, wie in Figur 5b gezeigt ist, am Ende einer Portion entgegen Ausstoßrichtung A zurückgesaugt wird um ein Nachlaufen der Masse zu verhindern. Die Förderpumpe 10 kann in ihrem Betrieb derart angepasst werden, dass immer eine ausreichende Menge an pastöser Masse den Dosiereinrichtungen zugeführt wird.

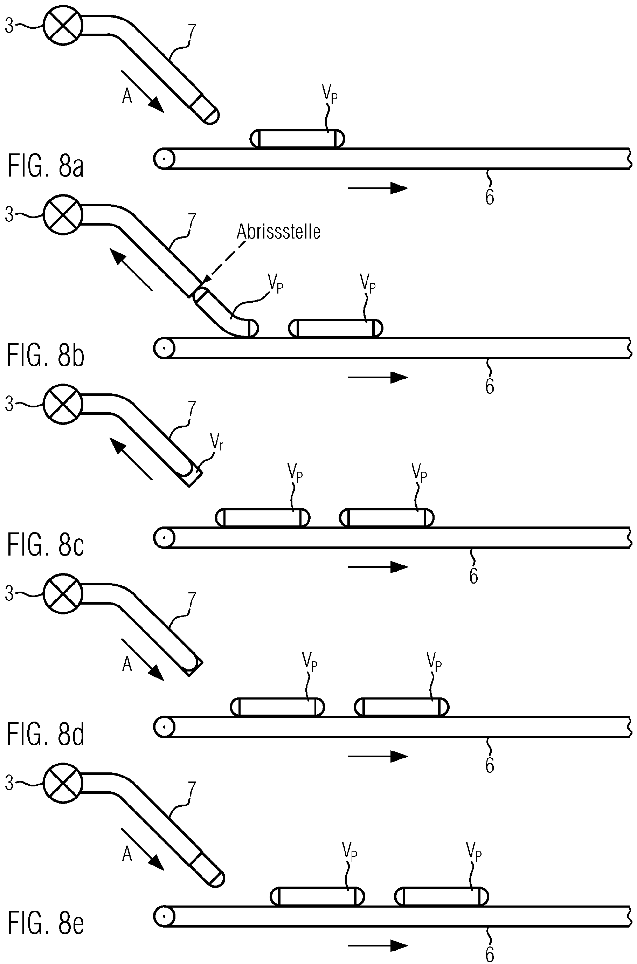

Figur 8a bis e zeigen stark vereinfacht die zeitliche Abfolge eines Ausführungsbeispiels gemäß der vorliegenden Erfindung.

In Figur 8a wird pastöse Masse, wie durch den Pfeil angedeutet, in Ausstoßrichtung A durch die Leitung 7 über das entsprechende Dosierelement 3 (und die Pumpe 10, hier nicht dargestellt), gefördert. Über das Transportband 6 werden die einzelnen Portionen mit einem entsprechenden Portionsvolumen Vₚ gefördert. Wurde nun von dem entsprechenden Dosierelement 3 ein bestimmtes Volumen V₁ gefördert, so wird die pastöse Masse zurückgesaugt, wie durch den Pfeil in Figur 8b angedeutet wird. Durch die Rückwärtsbewegung der pastösen Masse und die Transportbewegung des Bandes 6 reißt die pastöse Masse an der gekennzeichneten Abrissstelle am Ende der Leitung 7 ab.

Wie in Figur 8c gezeigt ist, fällt dann die Portion nach unten und die pastöse Masse wurde in der Leitung 7 zurückgesaugt, d.h. ein Volumen Vᵣ entgegen Ausstoßrichtung A zurückgesaugt.

Im Anschluss wird wie in Figur 8d dargestellt ist die pastöse Masse über die Dosiereinrichtungen 3 wieder in Ausstoßrichtung A bewegt und zwar so lange, wie in Figuren 8 8a gezeigt ist, bis wieder ein Volumen V ₁ ausgestoßen worden ist, wo bei V₁ = Vₚ+ Vᵣ. Der Betrieb des Förderwerks wird entsprechend angepasst, wie zuvor erläutert wurde.

Wenn die Abrissstelle am Ende der Leitung 7 angeordnet ist, wird dann zurückgesaugt, wenn eine Portion mit dem Volumen Vp aus der Leitung 7 ausgestoßen worden ist.

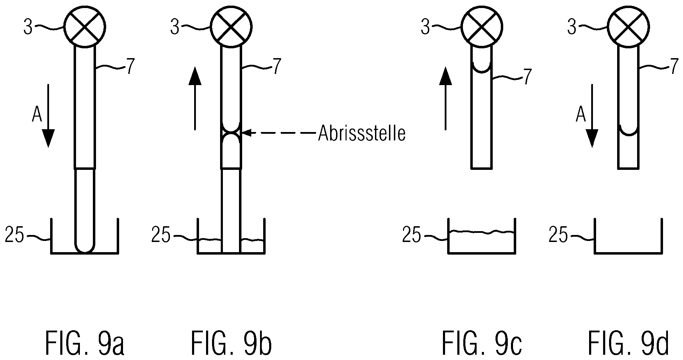

Dies ist aber nicht zwangsläufig der Fall. Figuren 9a bis 9d zeigen eine weitere Ausführungsform, wobei hier eine weniger viskose Masse portioniert wird, zum Beispiel Marmelade in ein Behältnis 25.

Wie aus Figur 9a hervorgeht, wird über ein Dosierelement 3 die pastöse Masse in Ausstoßrichtung A bewegt. Ist ein Volumen V₁ ausgestoßen worden, so erfolgt ein Rücksaugen entgegen der Ausstoßrichtung A, wie in Figur 9b gezeigt ist. Hier kann sich die Abrissstelle in einem Bereich zwischen dem Dosierelement und dem Ausstoßende der Leitung 7 befinden. Hier erfolgt ein Abtrennen durch das Rücksaugen und die Schwerkraft. Ist eine ausreichende Menge zurückgesaugt, d.h. Vr wie in Figur 9c gezeigt ist, kann die pastöse Masse wieder in Ausstoßrichtung A gefördert werden, wie in Figur 9d gezeigt ist und in einem nächsten Behälter 25 gefördert werden.

Die Menge Vr, die rückgesaugt werden soll sowie der Zeitpunkt des Rücksaugens, kann empirisch für ein entsprechendes Produkt bestimmt werden und ist insbesondere auch abhängig von der gewünschten Portionsgröße, Fördergeschwindigkeit, Leitungsinnenvolumen sowie Anordnung.

Grundsätzlich ist auch möglich, dass wenn die Dosiereinrichtungen 3a, b, c, d vom Füllstrom angetrieben werden, die Rückwärtsbewegung ausschließlich über den Unterdruck des Förderwerks 10 erzeugt wird oder ein Unterdruck in Ausstoßrichtung jeweils über Unterdruckleitungen vor den einzelnen Dosierelementen erzeugt wird. Wesentlich bei der Erfindung ist, dass am Ende einer Portion, d.h. wenn jeweils ein Volumen V₁ von dem Füllstromteiler transportiert wurde, damit ein Portionsvolumen V p aus dem jeweiligen Ausstoßende des Füllstromteiler 2 ausgestoßen werden kann, der Massenstrom entgegen der Ausstoßrichtung zurückgesaugt wird, um ein Nachlaufen zu verhindern.

Die ausgestoßene Portion wird dann automatisch vom Massestrom getrennt, da die angrenzende pastöse Masse rückgesaugt wird, und reißt ab. Insbesondere erfolgt die Trennung auch durch eine Relativbewegung zwischen der Portion und der nachfolgenden Portion, sodass keine beweglichen Teile zum Trennen des Produkts notwendig sind. Dies ermöglicht eine hohe Taktleistung gegenüber der Ventiltechnik. Bei dem in der Figur 2 gezeigten Ausführungsbeispiel werden die Portionen durch Schwerkraft und / oder durch die Bewegung des Transportbandes 6 vereinzelt.

Die vorliegende Erfindung eignet sich auch besonders gut für eine Koextrusionseinrichtung, das heißt, für eine Einrichtung, bei der um die in den Leitungen produzierten Einzelportionen noch eine koextrudierte Außenmasse aufgebracht und ggfs. ausgehärtet wird. Durch die sehr kleine Bauweise kann das Produktspektrum wesentlich erweitert werden. Insbesondere kann die Innenmasse exakt mit dem Füllstromleiter 2 portioniert werden, das heißt, dass Kleinstmengen portionsgenau eingefüllt und abgetrennt werden können und somit kleine Kaliber realisiert werden können.

Die Reinigung der Anlage ist aufgrund des einfachen Aufbaus, bei dem zwischen den Dosiereinrichtungen und den Ausstoßenden 12 keine Ausstoß- oder Verschlussventile angeordnet sind, sondern lediglich glatte, rohrförmige Innenwände in Kontakt mit der pastösen Masse kommen, sehr einfach.

Bei einem weiteren Ausführungsbeispiel, bei dem die Dosierelemente frei mitlaufen und über den Füllstrom angetrieben werden, ist die gemeinsame Zuleitung 16 zu den Dosierelementen mit einer Einrichtung zum Erzeugen eines Unterdrucks verbunden um die Dosierelemente jeweils rückwärts anzutreiben. Diese Einrichtung kann beispielsweise als Zylinder mit veränderbarem Volumen ausgebildet sein.

Gemäß einem weiteren Ausführungsbeispiel mit nicht angetriebenen Füllstromteiler, das heißt bei dem die Dosierelemente über den Füllstrom angetrieben werden, ist die Achse des Füllstromteilers, die die Dosierelemente, beispielsweise Schaufelräder verbindet, über einen Freilauf mit einer Einrichtung verbunden, die es ermöglicht, zum Rücksaugen die Achse des Füllstromteilers entgegen der Ausstoßrichtung zu drehen. Eine solche Einrichtung kann beispielsweise einen pneumatischen Zylinder umfassen, der über einen Hebel auf die Achse wirkt. Der Schutzumfang der Erfindung ist von den nachfolgenden Ansprüche bestimmt.

## Patentansprüche

1. Verfahren zum Portionieren pastöser Massen zur Nahrungsmittelherstellung mit einer Füllmaschine (1) und einem Füllstromteiler (2), wobei pastöse Masse von der Füllmaschine (1) in den Füllstromteiler gefördert und dort in mehrere Masseströme aufgetrennt und portionsweise in Ausstoßrichtung ausgestoßen wird, **wobei im Füllstromteiler (2) die aufgetrennten Masseströme jeweilige Dosierelemente (3a, 3b, 3c, 3d) zur Einstellung des Volumenstroms passieren, dadurch gekennzeichnet, dass**
jeweils am Ende einer Portion (Vp) der Massestrom entgegen der Ausstoßrichtung (A) zurückgesaugt wird, **und dass am Ende der Portion das jeweilige Dosierelement (3a, 3b, 3c, 3d) rückwärtsläuft.**

2. Verfahren nach Anspruch 1, **dadurch gekennzeichnet, dass** die Dosierelemente (3a, 3b, 3c, 3d) über einen Motor (5) angetrieben werden, und insbesondere als servoangetriebene Pumpen ausgebildet sind und vorzugsweise über einen gemeinsamen Antrieb angetrieben werden.

3. Verfahren nach mindestens einem der Ansprüche 1-2, **dadurch gekennzeichnet, dass**
die Dosierelemente (3a, 3b, 3c, 3d) von der pastösen Masse angetrieben werden, vorzugsweise als frei um eine Achse umlaufende Schaufelräder ausgebildet sind, wobei die Dosierelemente (3a, 3b, 3c, 3d) vorzugsweise miteinander gekoppelt sind und
insbesondere die Dosierelemente von einer Einrichtung beim Rücksaugen entgegen der Ausstoßrichtung bewegt werden.

4. Verfahren nach mindestens einem der Ansprüche 1-3, **dadurch gekennzeichnet, dass** ein Förderwerk (10) der Füllmaschine (1) die pastöse Masse portionsweise zum Füllstromteiler (2) fördert und insbesondere am Ende einer Portion rückwärtsläuft.

5. Verfahren nach Anspruch 4, **dadurch gekennzeichnet, dass** das von dem Förderwerk (10) zurückgesaugte Volumen im Wesentlichen der Summe der Volumina, die von den Dosierelementen zurückgesaugt werden, entspricht.

6. Verfahren nach mindestens einem der Ansprüche 1-4, **dadurch gekennzeichnet, dass** die ausgestoßenen Portionen von der nachfolgenden Portion wie folgt abgetrennt werden:
Vereinzeln insbesondere Abreißen durch eine Relativbewegung der ausgestoßenen Portion relativ zur nachfolgenden Portion insbesondere durch
- Mitnahme der ausgestoßenen Portion mit einer Transporteinrichtung (6), insbesondere einem Transportband (6), und/oder
- Hubbewegung des Füllstromteilers (2) oder der Ausstoßenden und/oder
- Gewichtskraft der ausgestoßenen Portion

7. Verfahren nach mindestens einem der Ansprüche 1-6, **dadurch gekennzeichnet, dass** an einem Ausstoßenden (12) des Füllstromteilers (2), insbesondere am Ende einzelner Leitungen, insbesondere Rohre und/oder Schläuche und/ oder Düsen, durch die die Portionen ausgestoßen werden, eine selbstschließende Membran (13), insbesondere eine geschlitzte Membran, angeordnet ist, die sich beim Rücksaugen der pastöse Masse verschließt und bei Bewegung der pastösen Masse in Ausstoßrichtung (A) automatisch öffnet.

8. Füllmaschine (1),
wobei die Füllmaschine (1) einen Füllstromteiler (2) und ein Förderwerk (10) umfasst zum Fördern von pastöser Masse zu dem Füllstromteiler (2), wobei
der Füllstromteiler (2) derart ausgebildet ist, dass er die pastöse Masse in mehrere Massenströme aufteilen und portionsweise in Ausstoßrichtung ausstoßen kann und mehrere Dosierelemente umfasst zum Einstellen des Volumenstroms der Massenströme, die die aufgetrennten Masseströme jeweils passieren,
**gekennzeichnet durch**
eine Steuereinrichtung (11), die derart ausgelegt ist und die die Füllmaschine (1) derart ansteuert, dass jeweils am Ende einer Portion der Massenstrom entgegen der Ausstoßrichtung zurückgesaugt wird und wobei am Ende der Portion das jeweilige Dosierelement rückwärtsläuft.

9. Füllmaschine (1) nach Anspruch 8, **dadurch gekennzeichnet, dass**
die Dosierelemente (3a ,3b, 3c, 3d) über einen Motor (5) angetrieben sind, insbesondere als servoangetriebene Pumpe ausgebildet sind und vorzugsweise über einen gemeinsamen Antrieb angetrieben werden
oder
die Dosierelemente (3a, 3b, 3c, 3d) vom Produkt angetrieben sind, vorzugsweise als frei um eine Achse umlaufende Schaufelräder ausgebildet sind,
wobei die Dosierelemente (3a, 3b, 3c, 3d) vorzugsweise miteinander gekoppelt sind.

10. Füllmaschine (1) nach Anspruch 8 oder 9, **dadurch gekennzeichnet, dass** nach den Dosierelementen Leitungen (7, 8, 9) insbesondere Rohre und/oder Schläuche und/oder Düsen angeordnet sind, über die die Masseströme gefördert und ausgestoßen werden, wobei diese vorzugsweise zueinander beweglich angeordnet sind, derart, dass der Abstand der Ausstoßenden benachbarter Leitungen (7 8, 9) zueinander veränderbar ist.

11. Füllmaschine (1) nach Anspruch 10, **dadurch gekennzeichnet, dass** die Leitungen gebogen sind und insbesondere deren Ausstoßende (12) nach unten, in Richtung einer Fläche, auf die die Portionen ausgestoßen werden, gerichtet ist, wobei die freie Ausstoßöffnung in einer Ebene liegt, die 0° - 60°, vorzugsweise 0° - 45° zu einer Ebene in der die Fläche liegt, geneigt ist.

12. Füllmaschine (1) nach Anspruch 10 oder 11, **dadurch gekennzeichnet, dass** zumindest ein Teil der Leitungen (7, 8, 9) verdrehbar befestigt sind.

13. Füllmaschine (1) nach mindestens einem der Ansprüche 9-12, **dadurch gekennzeichnet, dass**
zwischen den Dosierelementen (3a, 3b, 3c, 3b) und den Ausstoßenden (12) des Füllstromteilers (2) Leitungen ohne ansteuerbare Ausstoß-oder Verschlussventile angeordnet sind.

14. Füllmaschine (1) nach mindestens einem der Ansprüche 8-13, **dadurch gekennzeichnet, dass** am Ausstoßende (12) des Füllstromteilers (2) eine selbstschließende Membran (13), insbesondere eine geschlitzte Membran, angeordnet ist, die sich beim Rücksaugen der pastöse Masse verschließen kann und bei Bewegung der pastösen Masse in Ausstoßrichtung automatisch öffnen kann.

15. Verfahren nach mindestens einem der Ansprüche 1-7, **dadurch gekennzeichnet, dass** das zurückgesaugte Volumen (Vᵣ) 0,5% - 1000% des Innenvolumens der jeweiligen Leitungen (7, 8, 9) nach den jeweiligen Dosierelementen entspricht.

16. Verfahren nach mindestens einem der Ansprüche 1-7 und 15, **dadurch gekennzeichnet, dass** nachdem über das jeweilige Dosierelement (3) ein Volumen (Vr) zurückgesaugt worden ist, über das Dosierelement (3) ein Volumen (V1) in Ausstoßrichtung (A) gefördert wird, wobei das Portionsvolumen Vₚ = Vᵣ + V₁, wonach erneut ein Volumen (Vᵣ) zurückgesaugt wird.

## Claims

1. A method of portioning pasty masses for food production by means of a filling machine (1) and a filling flow divider (2), wherein a pasty mass is fed by the filling machine (1) into the filling flow divider, where it is separated into a plurality of mass flows and discharged in portions in the discharge direction wherein in the filling flow divider (2) the separated mass flows pass through respective dosing elements (3a, 3b, 3c, 3d) for adjusting the volume flow **characterized in that**
at the end of a portion (Vₚ) the mass flow is sucked back in a direction opposite to the discharge direction (A) respectively and **in that**
the respective dosing element (3a, 3b, 3c, 3d) is running backwards at the end of the portion.

2. The method according to claim 1, **characterized in that** the dosing elements (3a, 3b, 3c, 3d) are driven via a motor (5) and are in particular configured as servo-driven pumps and preferably driven via a joint drive.

3. The method according to at least one of the claims 1-2, **characterized in that**
the dosing elements (3a, 3b, 3c, 3d) are driven by the pasty mass, and are preferably configured as vane wheels, which rotate freely about an axle,
wherein the dosing elements (3a, 3b, 3c, 3d) are preferably coupled to one another and wherein
in particular the dosing elements are moved by a unit in a direction opposite to the discharge direction during the sucking back process.

4. The method according to at least one of the claims 1-3 , **characterized in that** a feed mechanism (10) of the filling machine (1) feeds the pasty mass in portions to the filling flow divider (2) and runs backwards, in particular at the end of a portion.

5. The method according to claim 4, **characterized in that** the volume sucked back by the feed mechanism (10) corresponds substantially to the sum of the volumes sucked back by the dosing elements.

6. The method according to at least one of the claims 1-4 , **characterized in that** the discharged portions are separated from the subsequent portions as follows:
singulating, in particular tearing off by a relative movement of the discharged portion relative to the subsequent portion by
- carrying along the discharged portion with a conveying unit (6), in particular a conveyor belt (6), and/or by
- a lifting movement of the filling flow divider (2) or of the discharge ends and/or by
- the weight force of the discharged portion.

7. The method according to at least one of the claims 1-6, **characterized in that** the discharge ends (12) of the filling flow divider (2), in particular the ends of individual lines, especially tubes and/or hoses and/or nozzles, through which the portions are discharged, have arranged thereon a self-closing membrane (13), in particular a slotted membrane, which closes when the pasty mass is sucked back and which automatically opens when the pasty mass moves in the discharge direction (A).

8. A filling machine (1),
wherein the filling machine (1) comprises a filling flow divider (2) and a feed mechanism (10) for feeding pasty mass to a filling flow divider (2), wherein
the filling flow divider (2) is configured such that it will be able to divide the pasty mass into a plurality of mass flows and discharge it in portions in the discharge direction and
comprises a plurality of dosing elements for adjusting the volume flow of the mass flows, which pass the separated mass flows respectively,
**characterized by**
a control unit (11), which is configured such that and which controls the filling machine (1) such that, at the end of a portion, the mass flow will be sucked back in a direction opposite to the discharge direction respectively and wherein the respective dosing element (3a, 3b, 3c, 3d) is running backwards at the end of the portion.

9. The filling machine (1) according to claim 8, **characterized in that**
the dosing elements (3a, 3b, 3c, 3d) are driven via a motor (5), are in particular configured as a servo-driven pump and are preferably driven via a joint drive
or
that the dosing elements (3a, 3b, 3c, 3d) are driven by the product, are preferably configured as vane wheels that rotate freely about an axle,
wherein the dosing elements (3a, 3b, 3c, 3d) are preferably coupled to one another.

10. The filling machine (1) according to claim 8 or 9, **characterized in that**, downstream of the dosing elements, lines (7, 8, 9), in particular tubes and/or hoses and/or nozzles, are arranged, via which the mass flows are fed and discharged, said lines being preferably arranged so as to be movable relative to one another such that the distance at which the discharge ends of neighboring lines (7, 8, 9) are spaced apart is variable.

11. The filling machine (1) according to claim 10, **characterized in that** the lines are curved and that in particular the discharge ends (12) thereof are directed downwards in the direction of a surface onto which the portions are discharged, the respective free discharge opening being located in a plane that is inclined by 0° to 60°, preferably by 0° to 45°, relative to a plane in which the surface lies.

12. The filling machine (1) according to claim 10 or 11, **characterized in that** at least a part of the lines (7, 8, 9) is rotatably fastened.

13. The filling machine (1) according to at least one of the claims 9-12, **characterized in that** lines having no controllable discharge or shut-off valves are arranged between the dosing units (3a, 3b, 3c, 3d) and the discharge ends (12) of the filling flow divider (2).

14. The filling machine (1) according to at least one of the claims 8-13, **characterized in that** the discharge end (12) of the filling flow divider (2) has arranged thereon a self-closing membrane (13), in particular a slotted membrane, which is able to close when the pasty mass is sucked back and to automatically open when the pasty mass moves in the discharge direction.

15. The method according to at least one of the claims 1-7, **characterized in that** the volume (Vᵣ) sucked back corresponds to 0.5 % to 1000 % of the internal volume of the respective lines (7, 8, 9) downstream of the respective dosing elements.

16. The method according to at least one of the claims 1-7 and 15, **characterized in that** after a volume (Vᵣ) has been sucked back via the respective dosing element (3), a volume (V₁) is fed via the dosing element (3) in the discharge direction (A), the portion volume being Vₚ = Vᵣ + V₁, whereupon a volume (Vᵣ) is again sucked back.

## Revendications

1. Procédé de portionnement de masses pâteuses pour la production alimentaire avec une machine de remplissage (1) et un diviseur de flux de remplissage (2), dans lequel la masse pâteuse est transportée de la machine de remplissage (1) jusque dans le diviseur de flux de remplissage et y est séparée en plusieurs flux massiques et est éjectée de manière portionnée dans une direction d'éjection, dans lequel, au sein du diviseur de flux de remplissage (2), les flux massiques séparés franchissent des éléments de dosage (3a, 3b, 3c, 3d) respectifs permettant d'ajuster le débit volumique, **caractérisé en ce que**
respectivement à la fin d'une portion (Vp), le flux massique est réaspiré dans la direction opposée à la direction d'éjection (A), et **en ce que** l'élément de dosage (3a, 3b, 3c, 3d) respectif recule à la fin de la portion.

2. Procédé selon la revendication 1, **caractérisé en ce que** les éléments de dosage (3a, 3b, 3c, 3d) sont entraînés par l'intermédiaire d'un moteur (5) et sont réalisés en particulier sous la forme de pompes servo-entraînées et sont de manière préférée entraînés par un entraînement commun.

3. Procédé selon au moins l'une quelconque des revendications 1 à 2, **caractérisé en ce que**
les éléments de dosage (3a, 3b, 3c, 3d) sont entraînés par la masse pâteuse, de manière préférée sont réalisés sous la forme de roues à aubes tournant librement autour d'un axe, dans lequel les éléments de dosage (3a, 3b, 3c, 3d) sont de manière préférée couplés les uns aux autres et
les éléments de dosage sont en particulier déplacés par un dispositif à l'encontre de la direction d'éjection lors de la réaspiration.

4. Procédé selon au moins l'une quelconque des revendications 1 à 3, **caractérisé en ce qu'**un convoyeur (10) de la machine de remplissage (1) achemine la masse pâteuse de manière portionnée vers le diviseur de flux de remplissage (2) et en particulier recule à la fin d'une portion.

5. Procédé selon la revendication 4, **caractérisé en ce que** le volume réaspiré par le convoyeur (10) correspond essentiellement à la somme des volumes réaspirés par les éléments de dosage.

6. Procédé selon au moins l'une quelconque des revendications 1 à 4, **caractérisé en ce que** les portions éjectées sont séparées de la portion suivante grâce à l'étape ci-dessous consistant à :
séparer, en particulier déchirer grâce à un mouvement relatif de la portion éjectée par rapport à la portion suivante, en particulier grâce à
- l'entrainement de la portion éjectée par un dispositif de transport (6), en particulier une bande transporteuse (6), et/ou
- le mouvement de levage du diviseur de flux de remplissage (2) ou des extrémités d'éjection et/ou
- le poids de la portion éjectée.

7. Procédé selon au moins l'une quelconque des revendications 1 à 6, **caractérisé en ce qu'**une membrane (13) à fermeture automatique, en particulier une membrane fendue, qui se ferme lors de la réaspiration de la masse pâteuse et s'ouvre automatiquement lors du déplacement de la masse pâteuse dans la direction d'éjection (A), est agencée à une extrémité d'éjection (12) du diviseur de flux de remplissage (2), en particulier à l'extrémité de conduites individuelles, en particulier de tubes et/ ou de tuyaux flexibles et/ou de buses, grâce auxquelles sont éjectées les portions.

8. Machine de remplissage (1), dans laquelle la machine de remplissage (1) comprend un diviseur de flux de remplissage (2) et un convoyeur (10) afin d'acheminer la masse pâteuse vers le diviseur de flux de remplissage (2), dans laquelle le diviseur de flux de remplissage (2) est réalisé de manière à pouvoir diviser la masse pâteuse en plusieurs flux massiques et l'éjecter de manière portionnée dans la direction d'éjection et comprend plusieurs éléments de dosage qui permettent d'ajuster le débit volumique des flux massiques et que franchissent respectivement les flux massiques séparés,
**caractérisée par**
un dispositif de commande (11) qui est conçu et commande la machine de remplissage (1) de telle manière que, respectivement à la fin d'une portion, le flux massique est réaspiré à l'encontre de la direction d'éjection et l'élément de dosage respectif recule à la fin de la portion.

9. Machine de remplissage (1) selon la revendication 8, **caractérisée en ce que**
les éléments de dosage (3a, 3b, 3c, 3d) sont entraînés par un moteur (5), en particulier sont réalisés sous la forme de pompes servo-entraînée et sont de manière préférée entraînés par un entraînement commun
ou
les éléments de dosage (3a, 3b, 3c, 3d) sont entraînés par le produit, de manière préférée sont réalisés sous la forme de roues à aubes tournant librement autour d'un axe,
dans lequel les éléments de dosage (3a, 3b, 3c, 3d) sont de manière préférée couplés les uns aux autres.

10. Machine de remplissage (1) selon la revendication 8 ou 9, **caractérisée en ce que** des conduites (7, 8, 9) grâce auxquelles les flux massiques sont transportés et éjectés, en particulier des tubes et/ou des tuyaux flexibles et/ou des buses, sont agencées en aval des éléments de dosage, dans laquelle lesdites conduites sont de manière préférée agencées de manière mobile les unes par rapport aux autres, de telle manière que la distance entre les extrémités d'éjection de conduites (7, 8, 9) voisines peut être modifiée.

11. Machine de remplissage (1) selon la revendication 10, **caractérisée en ce que** les conduites sont courbées et en particulier leur extrémité d'éjection (12) est dirigée vers le bas, en direction d'une surface sur laquelle les portions sont éjectées, dans laquelle l'orifice d'éjection libre se situe dans un plan qui est incliné entre 0° et 60°, de manière préférée entre 0° et 45°, par rapport au plan dans lequel se situe ladite surface.

12. Machine de remplissage (1) selon la revendication 10 ou 11, **caractérisée en ce qu'**au moins une partie des conduites (7, 8, 9) sont fixées de manière à pouvoir tourner.

13. Machine de remplissage (1) selon au moins l'une quelconque des revendications 9 à 12, **caractérisée en ce que** des conduites, dépourvues de soupapes d'éjection ou de fermeture pouvant être commandées, sont agencées entre les éléments de dosage (3a, 3b, 3c, 3b) et les extrémités d'éjection (12) du diviseur de flux de remplissage (2).

14. Machine de remplissage (1) selon au moins l'une quelconque des revendications 8 à 13, **caractérisée en ce qu'**une membrane à fermeture automatique (13), en particulier une membrane fendue, pouvant se fermer lors de la réaspiration de la masse pâteuse et pouvant s'ouvrir de manière automatique lors du déplacement de la masse pâteuse dans la direction d'éjection, est agencée au niveau de l'extrémité d'éjection (12) du diviseur de flux de remplissage (2).

15. Procédé selon au moins l'une quelconque des revendications 1 à 7, **caractérisé en ce que** le volume réaspiré (Vᵣ) représente entre 0,5 % et 1000 % du volume intérieur des conduites (7, 8, 9) respectives en aval des éléments de dosage respectifs.

16. Procédé selon au moins l'une quelconque des revendications 1 à 7 et 15, **caractérisé en ce que,** après la réaspiration d'un volume (Vr) par l'élément de dosage respectif (3), un volume (V1) est transporté dans la direction d'éjection (A) par l'élément de dosage (3), dans lequel le volume de portion Vₚ = Vᵣ + V₁, après quoi un volume (Vᵣ) est réaspiré à nouveau.
